# EUROPÄISCHE PATENTANMELDUNG

(11) **EP 3 340 578 A1**
(43) Veröffentlichungstag der Anmeldung: **27.06.2018**
(21) Anmeldenummer: 17207306.6
(22) Anmeldetag: 14.12.2017
(51) Int. Cl.: H04L 29/08, H04L 29/06, H04L 12/707

(54) **VERFAHREN ZUM ÜBERTRAGEN VON DATEN**

(30) Priorität: 21.12.2016 DE 102016225892
(71) Anmelder: Robert Bosch GmbH, 70442 Stuttgart (DE)
(72) Erfinder: Morgenroth, Johannes, 38100 Braunschweig (DE); Circa, Radu, 31134 Hildesheim (DE)

(57) **Zusammenfassung**

Die vorliegende Erfindung betrifft ein Verfahren zur Datenübertragung zwischen zwei Kommunikationsteilnehmern (3, 7, 9) einer Kommunikationsanordnung, bei dem von einem ersten Kommunikationsteilnehmer (3, 7, 9) zu einem zweiten Kommunikationsteilnehmer (3, 7, 9) zu übertragende Daten in einem ersten Schritt zumindest teilweise zu einem Vermittlungsgerät (5) übertragen werden, und bei dem das Vermittlungsgerät (5) in einem zweiten Schritt überprüft, ob der zweite Kommunikationsteilnehmer (3, 7, 9) ein Mehrwegeverfahren unterstützt, und bei dem für den Fall, dass der zweite Kommunikationsteilnehmer (3, 7, 9) das Mehrwegeverfahren unterstützt, das Vermittlungsgerät (5) noch zu übertragende Daten der an den zweiten Kommunikationsteilnehmer (3, 7, 9) zu übertragenden Daten über einen kommunikativen Direktpfad (13) unter Verwendung des Mehrwegeverfahrens zu dem zweiten Kommunikationsteilnehmer (3, 7, 9) überträgt, und andernfalls das Vermittlungsgerät (5) die noch zu übertragenden Daten der an den zweiten Kommunikationsteilnehmer (3, 9) zu übertragenden Daten über mindestens einen Proxy-Server (7) an den zweiten Kommunikationsteilnehmer (3, 9) überträgt.

## Beschreibung

Die vorliegende Erfindung betrifft ein Verfahren zur Datenübertragung zwischen zwei Kommunikationsteilnehmern einer Kommunikationsanordnung und ein Vermittlungsgerät.

### Stand der Technik

Die Bedeutung von Datenübertragungsverfahren nimmt insbesondere im Verkehrsbereich stetig zu. Dabei werden Verfahren zum sicheren und verlässlichen Übertragen von Daten sowohl für Unterhaltungssysteme als auch zum Betreiben von sicherheitsrelevanten Diensten bspw. im Bereich des autonomen Fahrens benötigt.

Gemäß dem Stand der Technik werden zur Übertragung von Daten zwischen einem Fahrzeug und einem Ziel-Server vorwiegend Vermittlungsgeräte eingesetzt, die zu übertragende Daten auf einer einzelnen Datenleitung bzw. einem einzelnen Datenkanal, wie bspw. einer WLAN-Verbindung oder einer Mobilfunkverbindung, übertragen. Derartige Verfahren sind jedoch anfällig für Funklöcher und andere netzwerkabhängige Übertragungsprobleme, die bspw. mit einer Signalqualität oder einem Datenverkehrsaufkommen auf einem jeweiligen Datenkanal zusammenhängen.

Um netzabhängige Übertragungsprobleme zu minimieren, können logische Tunnel zwischen einem Vermittlungsgerät und einem Proxy-Server aufgebaut werden, bei dem mehrere Verbindungen zur Datenübertragung genutzt werden. Derartige logische Tunnel führen jedoch zu hohen Latenzen und Skalierungsproblemen beim Zugriff mehrerer Teilnehmer auf den Proxy-Server. Weiterhin sind zur Verbindung jeweiliger Kommunikationsteilnehmer, wie bspw. einem Fahrzeug und einem Ziel-Server, mehrere logische Tunnel zur Durchführung eines sogenannten "Triangular Routing" nötig, was ebenfalls zu einer verminderten Übertragungsrate bzw. Übertragungsqualität beiträgt.

Im Gegensatz zu einem Verfahren zur Übertragung von Daten mittels logischer Tunnel können mit einem Mehrwegeverfahren verschiedene Verbindungen zusammengefasst bzw. gemeinsam zur Datenübertragung über eine Direktverbindung verwendet werden. Dies bedeutet, dass bspw. ein Teil von zu übertragenden Daten über eine WLAN-Verbindung und ein weiterer Teil der zu übertragenden Daten über eine Mobilfunkverbindung übertragen wird oder die Mobilfunkverbindung als Ausfallsicherheit zur Sicherung der WLAN-Verbindung verwendet wird und bspw. dann Daten über die Mobilfunkverbindung übertragen werden, wenn die WLAN-Verbindung Probleme verursacht. Dabei wird eine Verteilung der zu übertragenden Daten auf die verschiedenen Verbindungen mittels eines Protokolls verwaltet, das bspw. auf einem zur Übertragung der Daten verwendeten Vermittlungsgerät ausgeführt wird.

Im Stand der Technik sind daher Verfahren bekannt, die entweder eine Datenübertragung mittels des Mehrwegeverfahrens oder über logische Tunnel unter Verwendung eines Stellvertreters, wie bspw. einem Proxy-Server ermöglichen. Da Datenübertragungen über einen Proxy-Server bzw. über logische Tunnel zu verschiedenen Problemen bzgl. der Einstellung und Verwaltung des Proxy-Servers bzgl. einer möglichen Verbindungsgeschwindigkeit führen, ist eine direkte Datenübertragung mittels des Mehrwegeverfahrens einer Datenübertragung über einen Proxy-Server vorzuziehen.

### Offenbarung der Erfindung

Vor diesem Hintergrund werden ein Verfahren mit den Merkmalen des Anspruchs 1 und ein Vermittlungsgerät mit den Merkmalen des Anspruchs 11 vorgestellt. Ausgestaltungen ergeben sich aus der Beschreibung und den abhängigen Ansprüchen.

Das vorgestellte Verfahren dient insbesondere zum Bereitstellen einer Möglichkeit zur dynamischen Auswahl eines Übertragungsverfahrens, mit dem von einem ersten Kommunikationsteilnehmer zu einem zweiten Kommunikationsteilnehmer zu übertragende Daten so schnell und so sicher wie möglich zu dem zweiten Kommunikationsteilnehmer übertragen bzw. zwischen dem ersten Kommunikationsteilnehmer und dem zweiten Kommunikationsteilnehmer ausgetauscht werden. Dazu ist vorgesehen, dass von dem ersten Kommunikationsteilnehmer zu übertragende Daten zunächst an ein Vermittlungsgerät, d. h. ein sogenanntes "Gateway", und von dem Vermittlungsgerät an den zweiten Kommunikationsteilnehmer übertragen werden. Weiterhin ist vorgesehen, dass ermittelt wird, ob der zweite Kommunikationsteilnehmer ein sogenanntes Mehrwegeverfahren bzw. "Multihoming-Verfahren" unterstützt. Falls der zweite Kommunikationsteilnehmer das Mehrwegeverfahren unterstützt, wird eine auf dem Mehrwegeverfahren basierende Direktverbindung zwischen dem Vermittlungsgerät und dem zweiten Kommunikationsteilnehmer aufgebaut. Mittels der auf dem Mehrwegeverfahren basierenden Direktverbindung werden an den zweiten Kommunikationsteilnehmer zu übertragende Daten von dem Vermittlungsgerät übertragen bzw. zwischen dem zweiten Kommunikationsteilnehmer und dem ersten Kommunikationsteilnehmer ausgetauscht.

Es ist denkbar, dass der erste Kommunikationsteilnehmer und der zweite Kommunikationsteilnehmer Teil einer Kommunikationsanordnung mit einem sognannten "Client", wie bspw. einem Fahrzeug und einem Ziel-Server sind. Entsprechend kann der erste Kommunikationsteilnehmer bspw. der Client oder der Ziel-Server und der zweite Kommunikationsteilnehmer bspw. der Ziel-Server oder der Client sein. Es ist ferner denkbar, dass als zweiter Kommunikationsteilnehmer ein Proxy-Server gewählt wird, der zur Übertragung von Daten an einen weiteren Kommunikationsteilnehmer verwendet wird.

Sollte die Überprüfung des zweiten Kommunikationsteilnehmers ergeben, dass dieser das Mehrwegeverfahren nicht unterstützt, ist vorgesehen, dass die zu übertragenden Daten von dem Vermittlungsgerät über einen logischen Tunnel an mindestens einen Proxy-Server und von dem mindestens einen Proxy-Server zu dem zweiten Kommunikationsteilnehmer übertragen werden. Dies bedeutet, dass je nach Konfiguration des zweiten Kommunikationsteilnehmers bzw. in Abhängigkeit einer Unterstützung des zweiten Kommunikationsteilnehmers für das Mehrwegeverfahren das Vermittlungsgerät zwischen einer Datenübertragung mittels des Mehrwegeverfahrens und einer Datenübertragung mittels mindestens eines Proxy-Servers über verschiedene logische Tunnel wechselt. Da eine Datenübertragung mittels des Mehrwegeverfahrens in der Regel zu einer gegenüber einer Datenübertragung mittels eines Proxy-Servers schnelleren und verlässlicheren Datenübertragung führt, ist insbesondere vorgesehen, dass eine Datenübertragung mittels des vorgestellten Verfahrens prioritär unter Verwendung einer Direktverbindung zwischen einem Vermittlungsgerät und einem zweiten Kommunikationsteilnehmer unter Verwendung des Mehrwegeverfahrens abläuft.

Unter dem Begriff "Mehrwegeverfahren" ist im Kontext der vorliegenden Erfindung ein Verfahren zu verstehen, bei dem verschiedene Datenverbindungen, die insbesondere über verschiedene Datenübertragungskanäle realisiert sind, zur Übertragung von Daten verwendet werden. Bspw. kann ein Mehrwegeverfahren eine Übertragung von Daten mittels eines WLAN-Routers und einem UMTS-Modem vorsehen.

Um zu überprüfen, ob ein zweiter Kommunikationsteilnehmer das Mehrwegeverfahren unterstützt, kann vorgesehen sein, dass, nachdem die zu übertragenden Daten in dem ersten Schritt zumindest teilweise zu dem Vermittlungsgerät übertragen wurden, mindestens ein Testdatenpaket von dem Vermittlungsgerät an den zweiten Kommunikationsteilnehmer und von dem zweiten Kommunikationsteilnehmer zurück zu dem Vermittlungsgerät übertragen wird. Anhand einer durch den zweiten Kommunikationsteilnehmer übertragenen Nachricht kann dabei auf eine Fähigkeit zur Unterstützung des Mehrwegeverfahrens durch den zweiten Kommunikationsteilnehmer geschlossen werden. Dazu können bspw. Kopfdaten, d. h. ein sogenannter "Header", einer von dem zweiten Kommunikationsteilnehmer zu dem Vermittlungsgerät übertragenen Nachricht ausgelesen werden und hinsichtlich typischer beim Übertragen mittels des Mehrwegeverfahrens verwendeter Parameter, durchsucht werden. Selbstverständlich kann das Testdatenpaket auch mittels des Mehrwegeverfahrens an den zweiten Kommunikationsteilnehmer übertragen werden und anhand einer weiteren Verarbeitung des Testdatenpakets durch den zweiten Kommunikationsteilnehmer auf dessen Eignung zur Unterstützung des Mehrwegeverfahrens geschlossen werden. So kann bspw., wenn der zweite Kommunikationsteilnehmer ein unter Verwendung des Mehrwegeverfahrens an den zweiten Kommunikationsteilnehmer übertragenes Testdatenpaket verwirft bzw. nicht weiter verarbeitet, darauf geschlossen werden, dass der zweite Kommunikationsteilnehmer das Mehrwegeverfahren nicht unterstützt. Entsprechend wird das Vermittlungsgerät zum Übertragen von Daten an den zweiten Kommunikationsteilnehmer einen Proxy-Server und entsprechende logische Tunnel verwenden.

Um für eine neu aufzubauende Verbindung zwischen einem Vermittlungsgerät und einem zweiten Kommunikationsteilnehmer auf bereits ermittelte Kenntnisse über eine Eignung des zweiten Kommunikationsteilnehmers zur Unterstützung des Mehrwegeverfahrens zurückzugreifen und entsprechend ein stetig neues Überprüfen des zweiten Kommunikationsteilnehmers zu vermeiden, kann vorgesehen sein, dass ein Ergebnis der Überprüfung, ob der zweite Kommunikationsteilnehmer das Mehrwegeverfahren unterstützt, in einem Speicher des Vermittlungsgeräts zwischengespeichert und für folgende weitere Verbindungen zum Übertragen weiterer Daten zu dem zweiten Kommunikationsteilnehmer verwendet wird. Entsprechend kann vorgesehen sein, dass vor einer Überprüfung, ob der zweite Kommunikationsteilnehmer das Mehrwegeverfahren unterstützt, geprüft wird, ob in dem Speicher des Vermittlungsgeräts ein Hinweis darauf hinterlegt ist, ob der zweite Kommunikationsteilnehmer das Mehrwegeverfahren unterstützt.

Ferner kann ein zweiter Kommunikationsteilnehmer auf seine Eignung zur Unterstützung des Mehrwegeverfahrens überprüft werden, indem der zweite Kommunikationsteilnehmer identifiziert und mit einer Freigabeliste, d. h. einer sogenannten "White-List" abgeglichen wird. Dazu wird in einem Vermittlungsgerät eine Freigabeliste mit Kenndaten zu Geräten hinterlegt, die das Mehrwegeverfahren unterstützen. Vor einer Datenübertragung zu einem zweiten Kommunikationsteilnehmer werden Kenndaten des zweiten Kommunikationsteilnehmers, wie bspw. dessen Typ oder Hersteller, ermittelt, indem bspw. eine diesbezügliche Anfrage an den zweiten Kommunikationsteilnehmer gesendet wird. Die von dem zweiten Kommunikationsteilnehmer ermittelten Kenndaten werden mit den in der Freigabeliste vorgegebenen Kenndaten abgeglichen und für den Fall, dass die von dem zweiten Kommunikationsteilnehmer ermittelten Kenndaten von der Freigabeliste einem Gerät zugeordnet sind, welches das Mehrwegeverfahren unterstützt, eine auf dem Mehrwegeverfahren basierende Direktverbindung zwischen dem Vermittlungsgerät, das bspw. ein Router sein kann, und dem zweiten Kommunikationsteilnehmer hergestellt.

Zur Herstellung einer auf dem Mehrwegeverfahren basierenden Direktverbindung zwischen einem ersten Kommunikationsteilnehmer und einem zweiten Kommunikationsteilnehmer bzw. einem Vermittlungsgerät und einem zweiten Kommunikationsteilnehmer kann vorgesehen sein, dass zu der kommunikativen Direktverbindung alternative Übertragungswege bzw. alternative Kommunikationsknoten zu dem zweiten Kommunikationsteilnehmer geblockt werden. Dies bedeutet, dass das Vermittlungsgerät Übertragungswege bzw. Übertragungskanäle, die nicht für das Mehrwegeverfahren verwendet werden, still legt.

Es ist ferner denkbar, dass, um eine Übertragung von Daten zu einem zweiten Kommunikationsteilnehmer über eine Direktverbindung zwischen einem Vermittlungsgerät und dem zweiten Kommunikationsteilnehmer zu priorisieren, dem Vermittlungsgerät bestimmte Datenkanäle zum Übertragen von Daten vorgegeben werden.

Insbesondere kann gemäß dem vorgestellten Verfahren vorgesehen sein, dass eine Überprüfung eines zweiten Kommunikationsteilnehmers auf dessen Eignung zur Unterstützung des Mehrwegeverfahrens unter Verwendung eines logischen Tunnels zu einem Proxy-Server erfolgt. Für den Fall, dass die Überprüfung ergibt, dass der zweite Kommunikationsteilnehmer das Mehrwegeverfahren unterstützt, wird eine Direktverbindung von einem Vermittlungsgerät bzw. einem entsprechenden ersten Kommunikationsteilnehmer zu dem zweiten Kommunikationsteilnehmer aufgebaut, und es findet eine Datenübertragung zu dem zweiten Kommunikationsteilnehmer ausschließlich mittels der Direktverbindung statt.

Zur Durchführung des vorgestellten Verfahrens ist es erforderlich, dass das Vermittlungsgerät Kenntnis über alle verwendbaren Kommunikationspfade einer Kommunikationsanordnung besitzt. Insbesondere ist zur Durchführung des vorgestellten Verfahrens vorgesehen, dass zu dem zweiten Kommunikationsteilnehmer zu übertagende Datenpakete bzw. entsprechend verwendete Kommunikationsprotokolle von einem Format zur Übertragung über einen logischen Tunnel in ein Format zur Übertragung über den Direktpfad unter Verwendung des Mehrwegeverfahrens mittels des Vermittlungsgeräts übersetzt werden.

Es ist insbesondere vorgesehen, dass ein Mehrwegeverfahren zur Übertragung bzw. zum Austausch von Daten zwischen einem ersten Kommunikationsteilnehmer und einem zweiten Kommunikationsteilnehmer angewendet wird. Ein Datenaustausch zwischen dem ersten Kommunikationsteilnehmer und einem Vermittlungsgerät über ein Mehrwegverfahren ist dabei möglich aber nicht zwingend nötig.

Ferner betrifft die vorliegende Erfindung ein Vermittlungsgerät zur Übertragung von Daten zwischen zwei Kommunikationsteilnehmern einer Kommunikationsanordnung. Es ist vorgesehen, dass das Vermittlungsgerät dazu konfiguriert ist, von einem ersten Kommunikationsteilnehmer zu einem zweiten Kommunikationsteilnehmer zu übertragende Daten von dem ersten Kommunikationsteilnehmer in einem ersten Schritt zumindest teilweise zu empfangen, und in einem zweiten Schritt zu überprüfen, ob der zweite Kommunikationsteilnehmer ein Mehrwegeverfahren unterstützt. Es ist weiterhin vorgesehen, dass das Vermittlungsgerät dazu konfiguriert ist, für den Fall, dass der zweite Kommunikationsteilnehmer das Mehrwegeverfahren unterstützt, noch zu übertragende Daten der an den zweiten Kommunikationsteilnehmer zu übertragenden Daten über einen kommunikativen Direktpfad unter Verwendung des Mehrwegeverfahrens zu dem zweiten Kommunikationsteilnehmer zu übertragen und andernfalls die noch zu übertragenden Daten der an den zweiten Kommunikationsteilnehmer zu übertragenden Daten über mindestens einen Proxy-Server an den zweiten Kommunikationsteilnehmer zu übertragen.

Das vorgestellte Vermittlungsgerät dient insbesondere zur Durchführung des vorgestellten Verfahrens in einem Fahrzeug. Dazu kann das Vermittlungsgerät als Teil des Fahrzeugs vorgesehen sein und zum Einrichten einer Kommunikationsverbindung zwischen bspw. einem Endgerät eines Nutzers, wie bspw. einem Smartphone, und einem Ziel-Server, wie bspw. einem Internetserver oder einem Sicherheitsserver eines Verwaltungsprogramms zum Steuern eines autonomen Fahrbetriebs des Fahrzeugs, verwendet werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegeben Kombination, sondern auch in anderen Kombinationen oder in Alleinstellung verwendbar sind, ohne den Rahmen der vorliegenden Erfindung zu verlassen.

### Kurze Beschreibung der Zeichnung

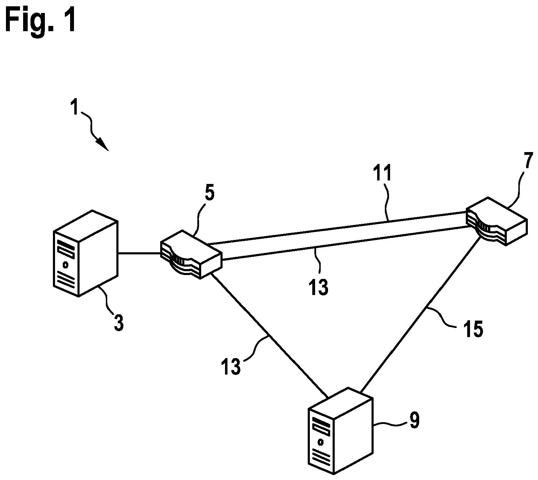

Figur 1 zeigt eine schematische Darstellung einer Kommunikationsanordnung mit einem zur Durchführung einer möglichen Ausgestaltung des vorgestellten Verfahrens konfigurierten Vermittlungsgerät.

### Ausführungsform der Erfindung

Die Erfindung ist anhand einer Ausführungsform in der Zeichnung schematisch dargestellt und wird nachfolgend unter Bezugnahme auf die Zeichnung ausführlich beschrieben.

In Figur 1 ist eine Kommunikationsanordnung 1 mit einem ersten Kommunikationsteilnehmer 3 in Form eines Client-Geräts, einem Vermittlungsgerät 5, sowie einem Proxy-Sever 7 und einem zweiten Kommunikationsteilnehmer 9 in Form eines Ziel-Servers dargestellt.

In einer möglichen Ausgestaltung des vorgestellten Verfahrens stellt der erste Kommunikationsteilnehmer 3 mit dem Vermittlungsgerät 5 eine TCP-Verbindung, d. h. eine Datenverbindung unter Verwendung eines TCP-Protokolls, her. Dazu generiert der erste Kommunikationsteilnehmer 3 ein TCP-SYN Datenpaket und überträgt dieses an das Vermittlungsgerät 5. Da der erste Kommunikationsteilnehmer 3 das Mehrwegeverfahren unterstützt, sind in Kopfdaten des TCP-SYN Datenpakets sogenannte "Multipath-TCP" bzw. "MP-TCP" Daten zu finden, so dass das Vermittlungsgerät 5 anhand der MP-TCP Daten darauf schließen kann, dass der erste Kommunikationsteilnehmer 3 das Mehrwegeverfahren unterstützt.

Das Vermittlungsgerät 5 hat jedoch zu Beginn einer Datenübertragung keine Kenntnis darüber, ob der zweite Kommunikationsteilnehmer 9 das Mehrwegeverfahren unterstützt. Um zu überprüfen, ob der zweite Kommunikationsteilnehmer 9 das Mehrwegeverfahren unterstützt, überträgt das Vermittlungsgerät 5 das TCP-SYN Datenpaket zu dem Proxy-Server 7 über einen logischen Tunnel, d. h. einen sogenannten "IP-Tunnel" 11. Der Proxy-Server 7 leitet das TCP-SYN Datenpaket zu dem zweiten Kommunikationsteilnehmer 9 über eine Verbindung 15 ohne die Verwendung eines logischen Tunnels weiter. Der zweite Kommunikationsteilnehmer 9 antwortet auf den Empfang des TCP-SYN Datenpakets mit einer Empfangsbestätigung bzw. einer TCP-SYN+ACK Kombination. Falls der zweite Kommunikationsteilnehmer 9 das Mehrwegeverfahren unterstützt, wird die Empfangsbestätigung zusätzliche Informationen enthalten, die Rückschlüsse darüber enthalten, ob der zweite Kommunikationsteilnehmer 9 das Mehrwegeverfahren unterstützt, wie bspw. in Kopfdaten der Empfangsbestätigung enthaltene MP-TCP Daten.

Die Empfangsbestätigung wird von dem zweiten Kommunikationsteilnehmer 9 zu dem Proxy-Server 7 und über den logischen Tunnel 11 zu dem Vermittlungsgerät 5 und letztlich zu dem ersten Kommunikationsteilnehmer 3 übertragen. Um einen Kopplungsvorgang, d. h. einen sogenannten "Handshake", zu vollziehen, sendet der erste Kommunikationsteilnehmer 3 eine Empfangsbestätigung, d. h. ein TCP-ACK Datenpaket, über den Proxy-Server 7 zu dem zweiten Kommunikationsteilnehmer 9.

Während des Kopplungsvorgangs zwischen dem ersten Kommunikationsteilnehmer 3 und dem zweiten Kommunikationsteilnehmer 9 werden von dem Vermittlungsgerät 5 die Kopfdaten jeweiliger Datenpakete ausgelesen. Aufgrund von in den Kopfdaten vorhandenen MP-TCP Daten schließt das Vermittlungsgerät 5 darauf, dass sowohl der erste Kommunikationsteilnehmer 3 als auch der zweite Kommunikationsteilnehmer 9 das Mehrwegeverfahren unterstützen. Zur Durchführung des vorgestellten Verfahrens ist es jedoch nicht zwingend erforderlich, dass der erste Kommunikationsteilnehmer 3 das Mehrwegeverfahren unterstützt. Insbesondere ist vorgesehen, dass das Vermittlungsgerät 5 eine Übersetzung zwischen von dem ersten Kommunikationsteilnehmer 3 und dem zweiten Kommunikationsteilnehmer 9 verwendeten Kommunikationsprotokollen bzw. entsprechenden Datenpakten durchführt. Dazu kann bspw. vorgesehen sein, dass das Vermittlungsgerät 5 das von dem ersten Kommunikationsteilnehmer 3 gesendete TCP-SYN Datenpaket in ein MP-TCP Datenpaket übersetzt und an den zweiten Kommunikationsteilnehmer 9 sendet.

Zum Übertragen des MP-TCP Datenpakets von dem Vermittlungsgerät 5 an den zweiten Kommunikationsteilnehmer 9, wird das Vermittlungsgerät 5 umgeschaltet, so dass die weitere Datenübertragung von und zu dem ersten Kommunikationsteilnehmer 3 über eine Direktverbindung 13 basierend auf dem Mehrwegeverfahren erfolgt. Entsprechend wird Datenverkehr von und zu dem zweiten Kommunikationsteilnehmer 9 von dem logischen Tunnel 11 zu dem Proxy-Server 7 zu der Direktverbindung 13 umgeleitet. Dazu kann das Vermittlungsgerät 5 entweder eine feste Route von zur Übertragung von Daten an den Ziel-Server zu verwendenden Datenkanälen vorgeben oder andere Datenkanäle als die Direktverbindung 13 blocken.

Sollte der Proxy-Server 7 das Mehrwegeverfahren unterstützen und der zweite Kommunikationsteilnehmer 9 nicht, können von dem Vermittlungsgerät 5 zu dem Proxy-Server 7 zu übertragende Daten zu dem Proxy-Server 7 über eine Direktverbindung 17 unter Verwendung des Mehrwegeverfahrens und zu dem zweiten Kommunikationsteilnehmer 9 unter Verwendung eines logischen Tunnels 15 übertragen werden.

## Patentansprüche

1. Verfahren zur Datenübertragung zwischen zwei Kommunikationsteilnehmern (3, 7, 9) einer Kommunikationsanordnung, bei dem von einem ersten Kommunikationsteilnehmer (3, 7, 9) zu einem zweiten Kommunikationsteilnehmer (3, 7, 9) zu übertragende Daten in einem ersten Schritt zumindest teilweise zu einem Vermittlungsgerät (5) übertragen werden, und bei dem das Vermittlungsgerät (5) in einem zweiten Schritt überprüft, ob der zweite Kommunikationsteilnehmer (3, 7, 9) ein Mehrwegeverfahren unterstützt, und bei dem für den Fall, dass der zweite Kommunikationsteilnehmer (3, 7, 9) das Mehrwegeverfahren unterstützt, das Vermittlungsgerät (5) noch zu übertragende Daten der an den zweiten Kommunikationsteilnehmer (3, 7, 9) zu übertragenden Daten über einen kommunikativen Direktpfad (13) unter Verwendung des Mehrwegeverfahrens zu dem zweiten Kommunikationsteilnehmer (3, 7, 9) überträgt, und andernfalls das Vermittlungsgerät (5) die noch zu übertragenden Daten der an den zweiten Kommunikationsteilnehmer (3, 9) zu übertragenden Daten über mindestens einen Proxy-Server (7) an den zweiten Kommunikationsteilnehmer (3, 9) überträgt.

2. Verfahren nach Anspruch 1, bei dem überprüft wird, ob der zweite Kommunikationsteilnehmer (3, 7, 9) das Mehrwegeverfahren unterstützt, indem, nachdem die zu übertragenden Daten in dem ersten Schritt zumindest teilweise zu dem Vermittlungsgerät (5) übertragen wurden, mindestens ein Testdatenpaket von dem Vermittlungsgerät (5) an den zweiten Kommunikationsteilnehmer (3, 7, 9) und von dem zweiten Kommunikationsteilnehmer (3, 7, 9) zurück zu dem Vermittlungsgerät (5) übertragen wird, und anhand einer durch den zweiten Kommunikationsteilnehmer (3, 7, 9) übertragenen Botschaft auf eine Fähigkeit zur Unterstützung des Mehrwegeverfahrens durch den zweiten Kommunikationsteilnehmer (3, 7, 9) geschlossen wird.

3. Verfahren nach einem der voranstehenden Ansprüche, bei dem ein Ergebnis der Überprüfung, ob der zweite Kommunikationsteilnehmer (3, 7, 9) das Mehrwegeverfahren unterstützt, in einem Speicher des Vermittlungsgeräts (5) zwischengespeichert und für folgende weitere Verbindungen zum Übertragen weiterer Daten zu dem zweiten Kommunikationsteilnehmer (3, 7, 9) verwendet wird, und bei dem vor einer Überprüfung, ob der zweite Kommunikationsteilnehmer (3, 7, 9) das Mehrwegeverfahren unterstützt, geprüft wird, ob in dem Speicher des Vermittlungsgeräts (5) ein Hinweis darauf hinterlegt ist, ob der zweite Kommunikationsteilnehmer (3, 7, 9) das Mehrwegeverfahren unterstützt.

4. Verfahren nach Anspruch 3, bei dem als Speicher ein Pufferspeicher verwendet wird.

5. Verfahren nach Anspruch 1, bei dem überprüft wird, ob der zweite Kommunikationsteilnehmer (3, 7, 9) das Mehrwegeverfahren unterstützt, indem der zweite Kommunikationsteilnehmer (3, 7, 9) identifiziert und mit einer Freigabeliste abgeglichen wird.

6. Verfahren nach Anspruch 5, bei dem der zweite Kommunikationsteilnehmer (3, 7, 9) anhand einer Typenbezeichnung identifiziert wird.

7. Verfahren nach einem der voranstehenden Ansprüche, bei dem zu dem zweiten Kommunikationsteilnehmer (3, 7, 9) zu übertagende Datenpakete von einem Format zur Übertragung über einen logischen Tunnel in ein Format zur Übertragung über den Direktpfad (13) unter Verwendung des Mehrwegeverfahrens übersetzt werden.

8. Verfahren nach einem der voranstehenden Ansprüche, bei dem zu der kommunikativen Direktverbindung alternative Übertragungswege zum Übertragen der noch zu übertragenden Daten zu dem zweiten Kommunikationsteilnehmer (9) geblockt werden.

9. Verfahren nach einem der voranstehenden Ansprüche 1 bis 7, bei dem Datenkanäle zum Übertragen der noch zu übertagenden Daten dem Vermittlungsgerät (5) vorgegeben werden.

10. Verfahren nach einem der voranstehenden Ansprüche, bei dem für den Fall, dass der zweite Kommunikationsteilnehmer (3, 9) das Mehrwegeverfahren nicht unterstützt und ein in einem Kommunikationspfad zwischen dem ersten Kommunikationsteilnehmer (3, 9) und dem zweiten Kommunikationsteilnehmer (3, 9) vorgesehener Proxy-Server (7) das Mehrwegeverfahren unterstützt, die an den zweiten Kommunikationsteilnehmer (3, 9) zu übertragenden Daten über einen Direktpfad unter Verwendung des Mehrwegeverfahrens und von dem Proxy-Server (7) zu dem zweiten Kommunikationsteilnehmer (3, 9) über einen logischen Tunnel übertragen werden.

11. Vermittlungsgerät zur Übertragung von Daten zwischen zwei Kommunikationsteilnehmern (3, 7, 9) einer Kommunikationsanordnung, wobei das Vermittlungsgerät (5) dazu konfiguriert ist, von einem ersten Kommunikationsteilnehmer (3, 9) zu einem zweiten Kommunikationsteilnehmer (3, 7, 9) zu übertragende Daten von dem ersten Kommunikationsteilnehmer (3, 9) in einem ersten Schritt zumindest teilweise zu empfangen, und in einem zweiten Schritt zu überprüfen, ob der zweite Kommunikationsteilnehmer (3, 7, 9) ein Mehrwegeverfahren unterstützt, und wobei das Vermittlungsgerät weiterhin dazu konfiguriert ist, für den Fall, dass der zweite Kommunikationsteilnehmer (3, 7, 9) das Mehrwegeverfahren unterstützt, noch zu übertragende Daten der an den zweiten Kommunikationsteilnehmer (3, 7, 9) zu übertragenden Daten über einen kommunikativen Direktpfad (13) unter Verwendung des Mehrwegeverfahrens zu dem zweiten Kommunikationsteilnehmer (3, 7, 9) zu übertragen und andernfalls die noch zu übertragenden Daten der an den zweiten Kommunikationsteilnehmer (3, 9) zu übertragenden Daten über mindestens einen Proxy-Server (7) an den zweiten Kommunikationsteilnehmer (3, 9) zu übertragen.
